# EUROPEAN PATENT SPECIFICATION

(11) **EP 3 902 744 B1**
(45) Date of publication and mention of the grant of the patent: **09.07.2025**
(21) Application number: 19919693.2
(22) Date of filing: 21.03.2019
(51) Int. Cl.: B64C 1/26, B64C 25/00, B64C 27/22, B64C 29/00, B64C 27/24, B64C 3/38, B64D 27/24, B64D 27/02

(54) **VERTICAL TAKEOFF AND LANDING TILTING FUSELAGE WINGED FRAME MULTIROTOR AIRCRAFT**
VTOL-MULTIROTORFLUGZEUG MIT SCHWENKBAREM RUMPF UND FLÜGELRAHMEN
AVION MULTI-ROTOR À CADRE AILÉ ET À FUSELAGE À INCLINAISON VTOL

(43) Date of publication of application: 03.11.2021
(73) Proprietor: Acikel, Gurkan, 26555 Tepebasi, Eskisehir (TR)
(72) Inventor: Acikel, Gurkan, 26555 Tepebasi, Eskisehir (TR)
(86) International application number: PCT/TR2019/050183
(87) International publication number: WO 2020/190223

(56) References cited:
- WO-A1-2019/122926
- CN-A- 105 730 676
- CN-A- 107 244 415
- CN-A- 108 639 328
- CN-U- 207 029 551
- RU-C1- 2 132 289
- US-A1- 2016 114 887
- US-A1- 2016 209 290
- US-A1- 2018 002 011
- US-A1- 2018 339 761
- US-A1- 2018 354 615

## Description

### Technical Field

The purpose of this patent application is; design of the novel manned vertical takeoff and landing (VTOL) tilting fuselage winged frame multirotor aircraft that can takeoff, fly and land as a multirotor aircraft; flies at high speed at cruise flight as an airplane.

### Background Art

The multirotor system aerodynamics are similar with helicopter aerodynamics. Their operating speed is slower than airplanes. There are many studies to design aircraft takeoff and land vertically like the helicopters but fly horizontally like the airplanes. The tilt-rotor, tilt-wing and vectored thrust jets are well known examples. The tilt-rotor have conventional wings and tilted large span propellers powered by turbo-prop engines on wing tip. The idea on these tilt rotor aircraft is rotating propellers and engines while wings and fuselage are stationary. The large span propellers and high power turbo-prop engines are installed to wing tips used for takeoff/land and forward flight. The tilt rotor systems complex and high cost systems that have slower cruise speed than airplanes. Similar technic used on tilt-wing but wings rotated with engines installed rigidly on wings. Another example of the X wing shaped aircraft rotates wings that propeller and engines installed on these X shaped wings. The vectored thrust vertical takeoff and landing fighter aircraft has thrust nozzles placed under the aircraft for the takeoff and landing and thrust nozzles on back off aircraft for the forward flight. All these concepts has a stationary fuselage and aircraft changes direction of thrust for transition flight. The tail sitter fixed wing aircraft that take-off and land vertically, cruise flight horizontally, developed were powered by gas turbine engines driving dual counter rotating propellers. The pitch-transitioning aircraft concepts developed that separate propulsion systems for separate flight modes. These aircraft concepts use one or more propulsion systems for high speed forward flight and carry four or more additional motors specifically for hovering flight.

The multirotor concept commonly used for the small unmanned electrically powered platforms (drones). The fixed pitch propellers driven by the electric motors mainly used these multirotor platforms. Due to limited thrust and high weight of battery and electric motors, the multirotor systems have limited pay-load capacity and they have little endurance and range. The main restriction and disadvantage of these systems is that the aircraft must always overcome to gravity with the thrust. These multirotor systems consume too much electrical power to stay in air. The multirotor systems need electric-motors to maneuver precisely. But the electric motor and battery technology is not improved yet to make lighter batteries and electric motors. Also speed of the multirotor is limited because of design factors.

The classic multirotor systems usually don't have wings to produce lift and tilting angle and forward thrust is limited by need of down-ward thrust to keep the altitude. There are some studies and patents about the multirotor systems that has a wing for the forward flight. These designs are small unmanned aircrafts that takeoff and land as multirotor and cruises as airplane using air foil shaped wings. But their fuselage is stationary relative to wings or propellers. These design limits and make harder the manned flight. The prior art disclosure US 2018354615 A1 relates, in general, to aircraft operable to transition between a forward flight mode and a vertical takeoff and landing flight mode and, in particular, to an X-tiltwing aircraft having a distributed propulsion system operated responsive to autonomous flight control, remote flight control, onboard pilot flight control and/or combinations thereof. The aircraft with Selectively Attachable Passenger Pod Assembly disclosed in US 2018002011A1 is another example of the prior art, where in the aircraft operable to transition between a forward flight mode and a vertical takeoff and landing mode and, in particular, to aircraft having a distributed propulsion system. This example also uses thrust vectoring system for flight control and a pod assembly is selectively attachable to the flying frame such that the flying frame is rotatable about the pod assembly. The aircraft includes an airframe and a versatile propulsion system attached to the airframe is the another example for the background art.

### Summary of Invention

The main idea of this design is to keep wings, engines and propellers stationary relative to flight path while rotating aircraft's cockpit and cabin (fuselage) for modes of the flight. The X or H wing multirotor design that has airfoil shaped (wing) X or H frame multirotor design used to explain the invention. The tilting fuselage aircraft can takeoff/land and fly like a X/H frame multirotor that uses propellers on wing tips to produce lift and thrust. After takeoff aircraft begin to fly, gain altitude and air speed like the other classic multirotor systems. In this design aircraft has airfoil shaped X/H wings. The aircraft propellers produce forward thrust while wing shaped wings produce the lift. When the multirotor aircraft gained enough altitude and forward airspeed, aircraft X/H frame and propellers moved downward aerodynamically to the horizontal plane while tilting the fuselage upward mechanically to keep pilots and passengers sitting relatively parallel to ground. The tilting movement of the fuselage helps to balance aircraft weight and lift during the forward flight.

The aircraft concept comprises two major parts: a winged carrier frame and a tilting fuselage. The winged carrier frame comprises f X/H Wing shaped wings, engines and propellers. It can be divided into similar two parts connected with the main spar which passes through the fuselage.

### Technical Problem

The design of high cruising speed vertically takeoff and landing aircraft is a difficult problem.

The helicopters are vertically takeoff and landing aircraft but their large span rotors that rotates in the direction of flight limits the high speed. Also the helicopters are highly complex flying machines with the high production and maintenance costs.

The tilt rotor and the tilt wing aircraft that takeoff and land like helicopter, cruises like airplane may be a solution of this problem, but these aircraft types have very complex thrust vectoring system. The tilt rotor and the tilt wing aircraft are also highly complex flying machines with the high production and maintenance costs. There are design difficulties such as not much forward speed and safety issues because off complex thrust vectoring system.

The tail sitter type aircraft is the another solution for the high cruising speed VTOL aircraft. These type of aircraft suffers control difficulties at takeoff, landing and hover phases. Also flight crew sitting position changes on aircraft flying position that makes difficult to control aircraft. Also these type of aircraft are relatively unstable at flight.

### Solution to Problem

The winged multirotor design used to achieve to high cruising speed. The aircraft takeoff and land using propellers or engine thrust like the tail sitter or the multirotor aircraft. After achieving the safe altitude the aircraft changes its flight angle to use the wings for the lift and by using the propeller or engine thrust for the forward speed.

The thrust controlling system used as a main flight control system that is less complex design than the tilt rotor and the tilt wing applications. Basically adjusting propeller or engine thrust by changing propeller pitch and/or engine power to reduce complexity of the aircraft. This advantage makes it possible to produce less complex more safe and more affordable Vertical Takeoff and Landing aircraft.

The flight crew or passenger position problem is solved using tilting fuselage design. The solution of the problem with this design is rotating the fuselage relatively to flying path to keep flight crew and passengers relatively parallel to the ground. Rotating of the fuselage also assists to keep aircraft's pitch axis stability by reducing the moment of inertia.

### Advantageous Effects of Invention

The main idea of this invention that, it is easier and simpler to rotate the fuselage than engines or wings. The winged frame design allows more fuel efficient and faster aircraft. The thrust controlling type main flight control system reduces the complexity, the design and production costs and the maintenance costs. The aircraft can be manufactured in various sizes. It can be small aircraft to carry one or two people on board or at much more big sizes like the airliner airplanes. This invention has the great potential to improve the air transport industry in future. This design has a large scope of application fields that it can be used at the urban or intercontinental transportation moreover at the space transportation.

### Brief Description of Drawings

The following figures prepared to use conjunction with detailed description of invention. All figures ordered according to paragraph sequence of the description. The X-Frame type multirotor illustrated as an example option for this invention but various type frame option such as H-Frame can be selected for the design purposes.
Fig.1

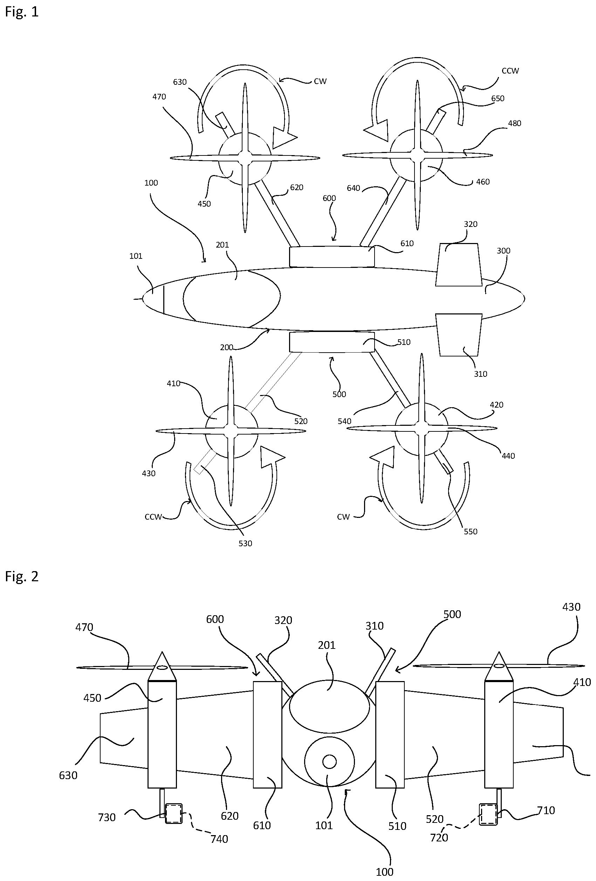

   Fig.1 is a plan view of the vertical takeoff and landing tilting fuselage winged frame multirotor aircraft at multirotor mode that is used for vertical take-off and landing phases.
Fig.2
   Fig. 2 is a front view of the vertical takeoff and landing tilting fuselage winged frame multirotor aircraft at multirotor mode that is used for the vertical takeoff and landing phases.
Fig.3

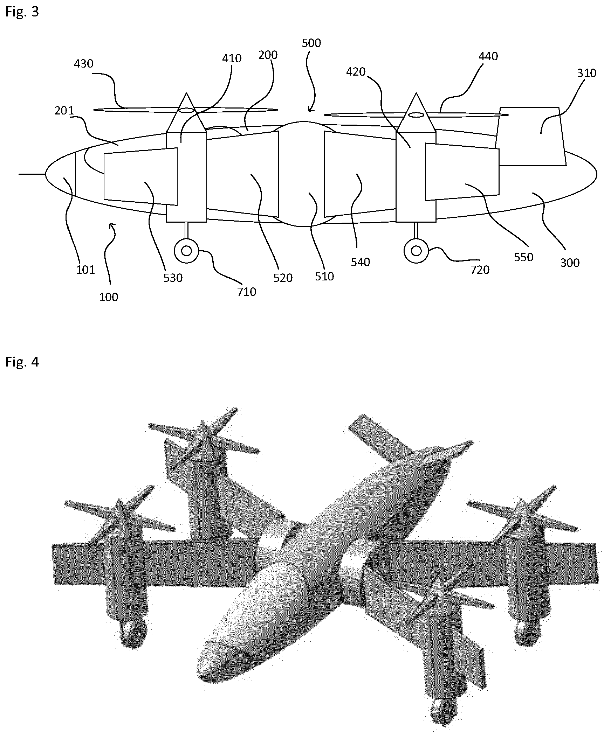

   Fig. 3 is a side view of the vertical takeoff and landing tilting fuselage winged frame Multirotor Aircraft at multirotor mode that is used for vertical take-off and landing phases.
Fig.4
   Fig. 4 is a perspective view of the vertical takeoff and landing tilting fuselage winged frame multirotor aircraft at multirotor mode that is used for the vertical takeoff and landing phases.
Fig.5

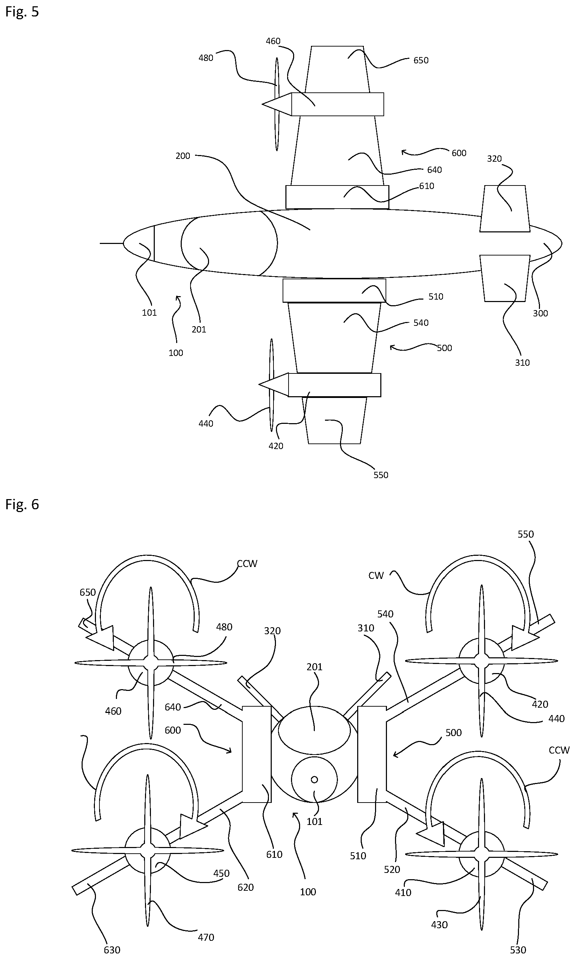

   Fig. 5 is a plan view of the vertical takeoff and landing tilting fuselage winged frame multirotor aircraft at airplane mode that is used for the high speed forward flight phase.
Fig.6
   Fig. 6 is a front view of the vertical takeoff and landing tilting fuselage winged frame multirotor aircraft at the airplane mode that is used for the high speed forward flight phase.
Fig.7

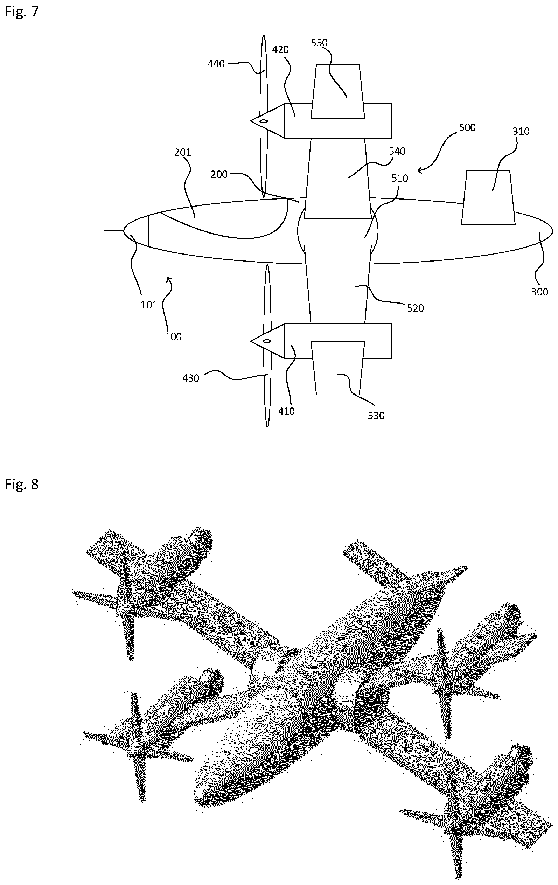

   Fig. 7 is a side view of the vertical takeoff and landing tilting fuselage winged frame multirotor aircraft at the airplane mode that is used for the high speed forward flight phase.
Fig.8
   Fig. 8 is a perspective view of the vertical takeoff and landing tilting fuselage winged frame multirotor aircraft at the airplane mode that is used for the high speed forward flight phase.
Fig.9

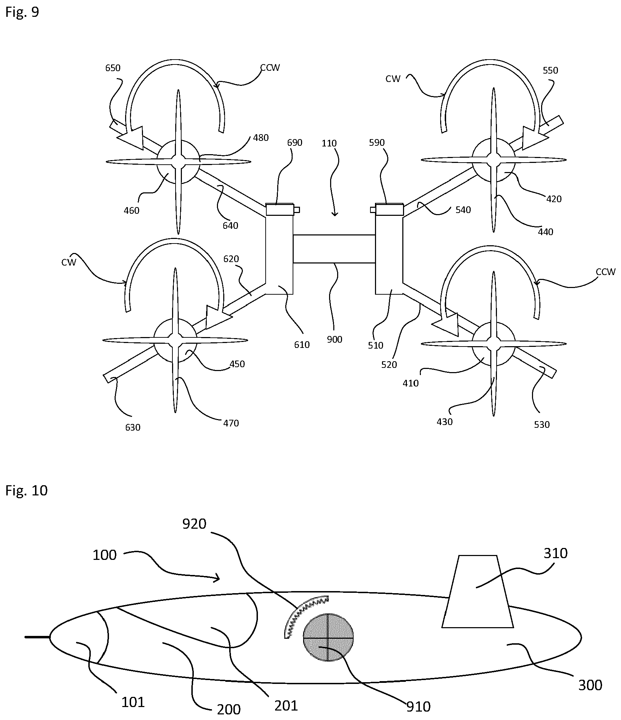

   Fig. 9 is a front view of the winged carrier frame
Fig.10
   Fig. 10 is a side view of the tilting fuselage]
Fig. 11

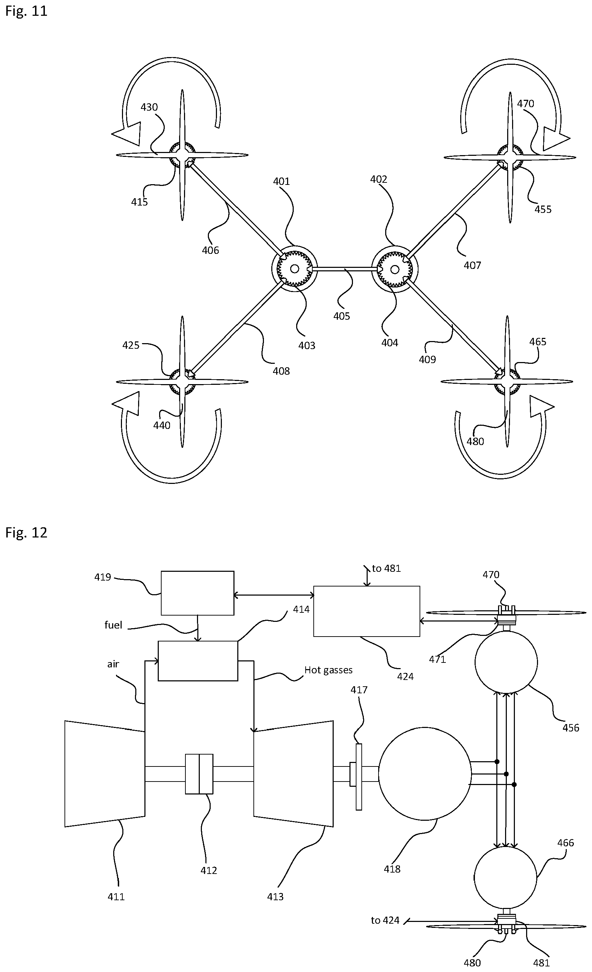

   [Fig. 11 is a plan view of the twin turboshaft engine propulsion system option]
Fig. 12
   [Fig. 12 is a schematic diagram of the gas turbine driven generator powered electric propulsion system option]
Fig. 13

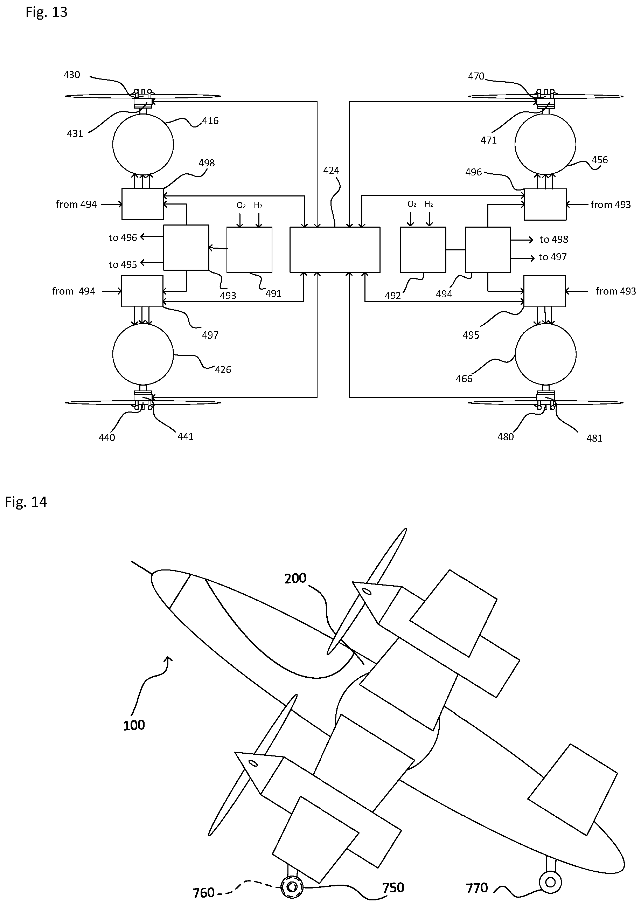

   [Fig. 13 is a schematic diagram of the fuel cell powered electric propulsion system option]
Fig. 14
   [Fig. 14 is a side view of the vertical takeoff and landing tilting fuselage winged frame multirotor aircraft at airplane configuration after the emergency landing on the runway.]

### Description of Embodiments

This invention is generally directed to vertical takeoff and landing (VTOL) aircraft that can takeoff, fly and land as a multirotor aircraft and flies at high speed at cruise flight as an airplane. This invention makes it possible to design less complex, affordable and safe VTOL aircraft. The aircraft comprises two major parts. First main part is the X/H-wing (winged) carrier frame that includes wings, engines, propellers and landing gears. Second main part is the tilting fuselage that includes cockpit, cabin and tail.

The winged carrier frame is basically an X/H frame multirotor aircraft that has the wing foil shaped arms (wings). The aircraft can vertically takeoff and land as a helicopter or multirotor. After the takeoff aircraft would continue to fly in this mode at low speed. At this mode thrust generated by the engine and propeller directed to the ground to overcome gravity. After gaining an altitude and forward airspeed, the aircraft changes its flying axis that wings and direction of thrust parallel to the horizon. This is the mode that the aircraft has basic airplane flying characteristics and lift generated by wings while forward thrust generated by propellers.

The basic motivation on vertical takeoff and landing winged frame tilting fuselage aircraft in Fig. 1 to design non-complex affordable aircraft that has less moving parts. The main idea of this invention is that it is easier and simpler to rotate a fuselage than engines or wings. The main function of the fuselage in this invention to accommodate crew, passenger and payload. The tilting fuselage 100 comprises nose cone 101, middle fuselage 200, windshield 201, tail cone 300 and V-Tail control surfaces 310 and 320 in Fig. 1. The main flying sections of the aircraft including wings, engines, and fuel tanks and supporting bodies installed on the winged carrier Frame 110 in Fig. 9. The left forward main landing gear 710, right forward main landing gear 750, left aft main landing gear 720 and right aft main landing gear 760 in Fig 2. are installed on nacelles of the left forward engine 410, right forward engine 450, left aft engine 420 and right aft engine 460 are those first shown in Fig. 1.

As seen on Fig. 1 aircraft has four wing structure comprising left wing 500 and right wing 600. These two major parts are symmetric and identical to each other. Left 500 and right 600 wings include supporting frames 510 and 610. Main feature of these supporting frames is connecting forward and aft wings and carrying propulsion and accessories to tilt the fuselage. Left and right forward wings comprising inner 520, 620 and outer 530, 630 wings. These two wing parts are connected with the main spar 900 in Fig. 9 which is connected to the supporting frame 510 and 610. Left and right aft wings consist of inner 540, 640 and outer 550, 650 wings. These two wing parts connected with main spar which is connected to supporting frames 510 and 610. Symmetric airfoil selected to provide stability in hover or multirotor mode. Airflow generated by propellers will form equal pressure on both sides of the symmetrical airfoil thus aircraft stability is enhanced at takeoff, hover and landing phase.

The left aft engine 420 and propeller 440 and right forward engine 450 and propeller 470 rotates clockwise while the left forward engine 410 and propeller 430 and right aft engine 460 and propeller 480 rotates counter clockwise. Engine with the propeller type propulsion system chosen for effective static thrust and effective yaw control of an aircraft. The variable pitch, high span propellers are used for the takeoff at multirotor mode with the low pitch high RPM, while cruising in an airplane mode high pitch low RPM will be used. Although propeller configuration seems to be a suitable solution at the beginning point. Another propulsion solution such as turbofan, electric ducted fan or even rocket engines for spacecraft applications will be available in the future.

When an aircraft in takeoff/landing or low speed phase of the flight, it flies like standard X-frame multirotor. The aircraft flight control system adjusts the power of all four engines to steady takeoff/landing or hover to make the aircraft parallel to the ground. When forward pitch flight direction is needed the aircraft flight control system will increase the power of aft engines 410, 450 and propellers 430, 470 while decreasing or fixing power of the forward engines 420, 460 and propellers 440, 480. It will directed to vice versa for the rear pitch flight direction. The aircrafts roll movement provided by adjusting the power of left side engines 410, 420 and propellers 430, 440 or right side engines 450, 460 and propellers 470, 480. Yaw movement is provided by adjusting the power of clockwise rotating engines 420, 450 and propellers 440, 470 or counter clockwise rotating engines 410, 460 and propellers 430, 480.

After the takeoff an aircraft will begin to gain airspeed and altitude in multirotor mode. Following the gain safe altitude and airspeed that airfoil shaped wings can generate lift aircraft can be switched to airplane mode. The winged carrier frame 110 in Fig. 9 will switched to airplane mode by increasing the thrust of the aft engines 410, 450 and propellers 430, 470 while decreasing or fixing the thrust of the forward engines 420, 460 and propellers 440, 480.The aircraft fuselage 100 tilted 90° to keep position relatively parallel to the ground as shown at this transition mode. This tilting motion can be provided by ring gear or hydraulic/pneumatic actuator mechanism. The clutched high torque electric motors with the locking mechanism 590 and 690 in Fig. 9 located into the winged carrier frame 110 to drive the fuselage, the tilting gear 920 located on the reinforced structure of the tilting fuselage 100. The main spar 900 in Fig. 9 which is connected to supporting frame 510 and 610 passes through the fuselage supporting spar 910 in Fig. 10. The main spar 900 and the fuselage supporting spar 910 works as a big greased plain bearing that supports the whole tilting fuselage 100 is positioned in the midst of winged carrier frame 110. The large roller bearings or ball bearings can be used instead of this greased large plain bearing design.

Rotating (tilting) the fuselage for the multirotor or airplane modes also assists to keep aircraft's pitch axis stability by reducing moment of inertia. The V-tail control surfaces 310 and 320 will be used as the auxiliary or back-up system of the engine thrust controlling type primary control system. The control surfaces are installed on the tail section of the tilting fuselage to provide basic empennage control surfaces of the airplane. V-Tail design selected for simple structure. Two control surfaces 310 and 320 are rotated by electric or hydraulic servos independently from each other. These V-Tail control surfaces control the aircraft on pitch and yaw axis. Increasing angle of attack with the same amount on both surfaces lead to nose down pitch movement while decreasing angle of attack leads to nose up pitch movement. Yaw axis movement is provided by increasing one control surface's angle of attack while decreasing the other surface's angle of attack.

Three types of propulsion system suggested for this aircraft are; classic twin turboshaft engine powered propeller drive shaft system, gas turbine driven generator powered electric motor system, hydrogen fuel cell powered electric motor system.

The twin turboshaft engine powered propulsion system is shown in Fig. 11. The gear illustrations were simply drawn and only for the reference to show the gears in the figure. This system is quite like a helicopter tail rotor drive system. Two turboshaft engines 401 and 402 in Fig. 11 installed into the supporting frames 510 and 610. The reduction gear box drive shaft of these two engines are connected to the transmission gears 403 and 404 through the freewheeling units. The transmission gears 403 and 404 in Fig. 11 are connected to each other through the power transfer shaft 405 in Fig. 11. Power transfer shaft used for engine malfunction. When one engine is out in the flight it will disconnected from transmission gear with a freewheeling unit. The single operating engines' rotation transferred to the other side through the power transfer shaft 405 in Fig. 11 and the single engine spins both transmission gears 403 and 404. The single engine should give them enough power to keep the aircraft in the air safely.

The propellers 430, 440, 470 and 480 driven by the propeller drive gearboxes 415, 425, 455, and 465 through gearbox drive shafts 406, 407, 408, and 409 and all four propeller RPM's are equal to each other for all operation. The engine power can be adjusted between idle to full throttle. All four propeller RPM increases to the maximum RPM when the engine power is increased for the takeoff . The variable pitch of all four propellers is increased when power increases. The propeller thrusts increased with increasing pitch and propellers will give enough power for the liftoff. Increased propeller pitch at fixed RPM causes increased thrust and torque. The aircrafts' flight control is provided by changing propeller pitch. The propeller's pitch change is provided by the hydraulic or electrical systems. The electronic precise propeller governors are used for this purpose. The pitch controlling governors of the all propellers are connected to the electronic flight control system of the aircraft. The electronic flight control system changes the propeller's pitch and deflects two control surfaces 310 and 320 of the V-tail if needed. The aircraft can be easily controlled in multirotor or airplane mode by the means of adjusting propeller pitch. Increasing propeller pitch until a certain angle of attack, causes increasing thrust of the propeller.

The gas turbine driven generator powered electric motor system shown in Fig. 12. This figure shows only one part of the aircraft propulsion system and another part of the power system identical to the figure. The left and right power system, gas turbine engine output shafts connected to each other with identical power transfer shaft 405 shown in Fig. 11. This feature is necessary for safety and the same generator RPM and frequency. The power generated by the engine is converted to the electrical energy then transferred to the electric motors using electrical power cables. This power generation technique is based on converting mechanical energy and again converting electrical energy to mechanical energy. Like the any other gas turbine system air compressed in compressor 411 in Fig. 12 and sent to the combustion chamber 414. The jet fuel metered by the full authority digital engine control unit and then injected into the combustion chamber 414. The expanded hot gasses directed to turbine 413 to spin it. The single stage turbine system illustrated in Fig. 12 but a multi stage free turbine design can be used. , The existing gas turbine designs may be used.

The turbine rotation coupled to the compressor 411 through coupling 412 and 3 phase synchronous generator 418 through coupling and reduction gear box 417. The reduction gear ratio will be chosen according to propellers 430, 470 RPM and 3 phase synchronous motors 421, 422 directly drive the propellers. Assuming the same number of poles used on both generator and electric motors; the generator RPM varies with the engine RPM, the generator frequency varies with the generator RPM and finally the electric motor RPM varies with the generator frequency. It can be expressed that the propeller RPM varies with the engine RPM. The 3 phase synchronous generator 418 electric power output directed to the 3 phase synchronous motors 421, 422.

The propeller thrust and RPM are controlled by the digitally controlled propeller governors 471, 481 which are controlled by the electronic flight/engine control system 424 that also monitors and controls the electronic engine control system. The electrical circuit control and protection system wasn't shown in the figure 12.

The gas turbine engine starting process is provided by a small electric starter/generator using an aircraft battery. The running engine rotates the generator 418 but the field current of the generator does not feed until the engine starts and stabilizes at idle RPM to avoid the braking torque of the generator. After the engine reached and stabilized at idle RPM, generator field current directed by the generator control unit which controls the generator output voltage. After the generator field current is provided, the generator starts to generate electrical power. The generated electric power feed to the synchronous electric motors through the electric power bus and circuit control devices (relays etc.) and circuit protection devices (current limiters etc.). These circuit control and protection devices are also used to drive other side propulsion systems during single engine operations, in case of the one engine malfunction.

The synchronous electric motor driven variable pitch propellers 470, 480 RPM and pitches are low at the idle engine RPM. When the throttle is advanced to increase the power for takeoff at the multirotor mode, the propeller RPM's are reached the maximum designated RPM. The propeller pitch increased to increase torque at maximum RPM. The propeller torque and RPM's are monitored and controlled by the digitally controlled propeller governors 471, 481 which are controlled by the Electronic Flight/Engine Control System 424. The propeller thrusts changed by changing the propeller blade pitch that changes the propeller torque. It can be expressed that an aircraft is controlled by the changing only propeller pitch, while all propellers spins at the same rotating speed. The increased propeller torque increases the electric motor torque and load thus the generator load and torque are also increased. The amount of the metered fuel directed to combustion chamber 414 increased by the electronic engine control system 419 to compensate the increased generator torque and to keep the constant engine, generator and motor RPM's. The synchronous electric generation technique is chosen to explain this gas turbine driven electric propulsion system but other techniques, such as the induction, permanent magnet or the hybrid design may be used. Also a low speed generator drive system with reduction gearbox may be replaced with a high speed generator system. In this case, rectifying the AC current to the DC and switching of this DC current to covert AC by using a power inverter to drive the electric motors at a certain frequency for the same propeller RPM will be necessary. The details of this system will be explained in the following paragraph which explains fuel cell power system.

The hydrogen fuel cell powered electric motor system shown in Fig. 13. This is the most environmentally friendly propulsion system option. The hydrogen fuel cell technology is new but there is much progress and developments implemented in this field. The successful applications existing in the automotive industry.

The hydrogen stored in the 4 (four) pressurized hydrogen cylinders that are located in the wing shaped arms of the winged carrier frame. The electricity generated by the fuel cell stacks 491, 492 in Fig. 13 used to charge the high efficiency battery packs 493, 494 that powers the electric motors 416, 426, 456, 466 through the electronic speed control systems (ESCs) 411, 421, 451, 461. All four ESCs controlled by the electronic flight/engine control system 424. The electric motors are 416, 426, 456, 466 drive the four variable pitch propellers 430, 440, 470, 480. The propeller torques and RPM's are monitored and controlled by the digitally controlled propeller governors 431, 441, 471, 481 which are controlled by the electronic flight/engine control System 424. The propeller thrusts are changed by the changing propeller RPM and the blade pitch using ESC's and the digitally controlled propeller governors. The electronic flight/engine control System 424 will be configured for multirotor and airplane modes. This propulsion system also has failsafe features that one battery stack will able to power the opposite system (cross-feeding) in case of malfunction.

The aircraft flight control system will appear to be an airplane flight control system but will work two different modes. A joystick or flight stick type control bar will work as classic helicopter cyclic control where a throttle will work as a helicopter collective and a throttle control. After the reaching safe altitude and enough airspeed that the wings can generate the lift an aircraft will be switched to airplane mode by the pilot in command. The electronic flight/engine control system 424 in Fig 12 and 13 will execute this complex maneuver only if safe conditions are met. The switching to the multirotor mode from the airplane mode for the landing will also be executed in the same manner.

The aircraft safety is very important that there must be additional features added to design to improve the safety, such as additional propellers or engines to land aircraft safely in case of the engine or propeller malfunctions. It provided that there are two major hazards that threaten the safety. The first one is the engine malfunction, the one second is the fuselage tilting system malfunction in the airplane mode. There are three small landing gears installed to downward wingtips 750, 760 and tail section 770 shown in Fig. 14. These small landing gears can be used during failures on the engine or fuselage tilting mechanism. In case of the abnormal conditions an aircraft stay in the airplane configuration and land on suitable runway while first touching the wingtip landing gears first and the tail landing gear after slowing down like the tail wheel equipped airplane. The landing gears are installed on the wing spars and tail section bulkheads that they are reinforced to carry landing loads. The control surfaces 310 and 320 on the tail section 300 shown in Fig. 5 will work as the main flight control system in case of the total or extensive engine failure.

The propulsion system can receive the power from the engines using the power transfer shaft or the electric motors receive the electric power from the engine driven generator or from the fuel cells.

The engine propulsion system or thruster can be a propeller or ducted fan or prop-fan.

The tilting mechanism used to tilt the fuselage can be a electro mechanic or hydraulic or pneumatic systems.

The electro-chemical electricity generating system is any type of the fuel cell that generates the electricity directly from the electro-chemical reaction process that is combining stored hydrogen or hydrogen rich fuel with the oxygen or air.

The battery packs used to power electric motors through the electronic speed controllers can be chemical batteries or super/ultra capacitors.

### Patent Literature

**PTL1:** US2018/354615 A1
**PTL2:** US 2016/0144957 A1
**PTL3:** WO 2017/200610 A1
**PTL3:** WO 91/11363**,** US005115996 A
**PTL4:** WO 2016/109003 A2
**PTL5:** US2003/0230671 A1
**PTL6:** US2015/0329204 A1
**PTL7:** US D471,247 S
**PTL8:** US 2016/0311528 A1
**PTL9:** US 2017/0158325 A1
**PTL10:** WO/2019/036011
**PTL11:** US20190031331 A1
**PTL12:** US20190031334 A1
**PTL 13:** US20190031335 A1
**PTL 14:** US20190031338 A1
**PTL 15:** US 2018/002011 A1
**PTL 16:** US 2018/0002026 A1

### Non Patent Literature

NPL1: Cutler, Mark and How, Jonathan P. "Analysis and Control of a Variable-Pitch Quadrotor for Agile Flight." Journal of Dynamic Systems, Measurement, and Control 137, no. 10 (July 2015):101002. © 2015 American Society of Mechanical Engineers http://dx.doi.org/10.1115/1.4030676
NPL2: Richard B. Bramlette and Ronald M. Barrett. "Design and Flight Testing of a Convertible Quadcopter for Maximum Flight Speed" 55th AIAA Aerospace Sciences Meeting, AIAA SciTech Forum, (AIAA 2017-0243) Grapevine, Texas January 2017
NPL3: Mark Johnson Cutler. "Design and Control of an Autonomous Variable-Pitch Quadrotor Helicopter" Master of Science in Aeronautics and Astronautics Massachusetts Institute of Technology 2012.
NPL4: Shouzhao Sheng * and Chenwu Sun. "Control and Optimization of a Variable-Pitch Quadrotor with Minimum Power Consumption" Energies 2016, 9, 232; doi:10.3390/en9040232 www.mdpi.com/journal/energies

## Claims

1. A vertical takeoff and landing multirotor aircraft (100) comprising:
a winged carrier frame (110) that comprises wing shaped left and right arms connected to left and right supporting frames (510, 610) connected together by a main spar (900),
said left and right wing shaped arms are symmetrical comprising forward and aft wing shaped arms, each said wing shaped arm has propulsion system housings and supporting nacelles;
a tilting fuselage (100) having a cockpit, a cabin and a tail section (300), that accommodates payload and is configured to be tilted 90° when said winged carrier frame switched to airplane mode or multirotor mode to keep position of the fuselage relatively parallel to the ground in both two flight modes;
wherein, said supporting nacelles also include landing gears (710, 720, 750, 760);
wherein, said winged carrier frame and said tilting fuselage having semi monocoque structure;
wherein, said main spar passes through a fuselage supporting spar in the midst of the aircraft;
wherein, tilting motion of the said tilting fuselage provided by a tilting mechanism.

2. The vertical takeoff and landing multirotor aircraft recited claim 1, wherein: the forward and aft wing shaped arms comprising inner (520, 540, 620, 640) and outer wing shaped arms (530, 550, 630, 650) connected by spars which are connected to the supporting frames.

3. The vertical takeoff and landing multirotor aircraft recited claim 1, wherein: said winged carrier frame's wing shaped arms having symmetrical airfoil cross-section.

4. The vertical takeoff and landing multirotor aircraft recited claim 1, said winged carrier frame comprises main flying sections of the aircraft, wherein: wings, propulsion systems, fuel tanks, supporting bodies and a primary flight control system components included in said winged carrier frame

5. The vertical takeoff_and landing multirotor_aircraft as recited in claim 1, wherein: said winged carrier frame comprising a left aft propulsion system (420); a left forward propulsion system (410); a right aft propulsion system (460) and a right forward propulsion system (450); wherein left aft and right forward propulsion systems rotate one direction and left forward and right aft propulsion systems rotate counter direction.

6. The vertical takeoff and landing multirotor aircraft recited in claim 1, wherein: said primary flight control system is a propulsion thrust controlling type system, wherein aircraft propulsion thrust adjusted to flight control for multirotor or airplane modes, aircraft primary flight control motion provided by differential thrusts of the propulsion systems.

7. The vertical takeoff and landing multirotor aircraft recited in claim 1, wherein: said tilting fuselage accommodates crew and payload in both multirotor or airplane modes; and assists to aircraft pitch axis stability by reducing moment of inertia and tail control surfaces function as an auxiliary or backup system to the thrust differential type primary flight control system in normal flight conditions; and the tail control surfaces function as the primary control system in emergency conditions.

8. The vertical takeoff and landing multirotor aircraft recited in claim 1, comprising:
a flight control system operable in a multirotor mode and an airplane mode; wherein, in multirotor mode, a flight control bar provides cyclic control input and a throttle controls collective thrust and engine power, and rudder pedals are used for yaw control;
wherein, in airplane mode, the flight control bar functions as an airplane control wheel or stick and the throttle controls engine thrust, and rudder pedals are used for yaw control;
wherein the flight control system transitions between multirotor and airplane modes using an electronic flight/engine control system;
wherein, in both multirotor and airplane modes, the flight control system adjusts propulsion thrusts; and wherein, the flight control system uses V-tail control surfaces as an auxiliary control.

9. The vertical takeoff and landing multirotor aircraft recited in claim 1, further comprising:
an emergency landing system comprising three small landing gears: one installed on each wing tip; and one installed on the tail section;
wherein, said emergency landing system is used for emergency landing during abnormal conditions, such as engine failure or fuselage tilting mechanism failure;
wherein, in case of abnormal conditions: aircraft is locked in airplane configuration; and the aircraft lands on suitable runway;
touching down first on the wingtip landing gears and then on the tail landing gear after slowing down; and wherein, in case of total or extensive engine failure, V-tail control surfaces function as main flight control system.

10. The vertical takeoff and landing multirotor aircraft recited in claim 1, wherein the aircraft comprises one of the following propulsion systems:
a classic twin turboshaft engine powered propeller drive shaft system;
a gas turbine engine driving generator powering electric motors;
or a hydrogen fuel cell powered electric motor system;
wherein all propellers are of the variable pitch type;
wherein propeller thrusts controlled by adjusting propeller pitch.

## Patentansprüche

1. Ein vertikales Start- und Lande-Multirotor-Luftfahrzeug (100), umfassend:
einen Flügelrahmen (110), der flügelförmige linke und rechte Arme umfasst, die mit linken und rechten Stützrahmen (510, 610) verbunden sind, welche durch einen Hauptholm (900) miteinander verbunden sind;
wobei die linken und rechten flügelförmigen Arme symmetrisch sind und vordere und hintere flügelförmige Abschnitte aufweisen, und wobei jeder dieser flügelförmigen Armen Antriebssystemgehäuse und Stützgondeln besitzt;
einen Kipprumpf (100) mit einem Cockpit, einer Kabine und einem Heckabschnitt (300), welcher Nutzlast aufnimmt und so konfiguriert ist, dass er um 90° gekippt wird, wenn der Flügelrahmen in den Flugzeugmodus oder den Multirotormodus geschaltet wird, um die Position des Rumpfes in beiden Flug Modi relativ parallel zum Boden zu halten;
wobei die Stützgondeln auch Fahrwerk (710, 720, 750, 760) umfassen;
wobei der Flügelrahmen und der Kipprumpf eine halbschalenartige Mehrflügelstruktur aufweisen;
wobei der Hauptholm durch einen Rumpfstützholm in der Mitte des Flugzeugs verläuft;
wobei die Kippbewegung des Kipprumpfs durch einen Kippmechanismus bereitgestellt wird.

2. Das vertikale Start- und Lande-Multirotor-Luftfahrzeug nach Anspruch 1, wobei:
die vorderen und hinteren flügelförmigen Arme innere (520, 540, 620, 640) und äußere flügelförmige Arme (530, 550, 630, 650) umfassen, welche durch Holme verbunden sind, die wiederum mit den Stützrahmen verbunden sind.

3. Das Vertikalstart- und Lande-Multirotorflugzeug nach Anspruch 1, wobei:
die flügelförmigen Arme des Flügelrahmens einen symmetrischen Tragflächenquerschnitt aufweisen.

4. Das Vertikal-Start-und Landemultirotor-Flugzeug nach Anspruch 1, wobei der Flügeltragrahmen Hauptflugabschnitte des Flugzeugs umfasst, wobei: Flügel, Antriebssysteme, Kraftstofftanks, Stützkörper und eine primäre Flugsteuerungssystemkomponenten, die in dem Flügeltragrahmen enthalten sind, umfasst.

5. Das Vertikal-Start-und Landemultirotorflugzeug nach Anspruch 1, wobei der Flügeltragrahmen umfasst:
ein linkes hinteres Antriebssystem (420); ein linkes Vorwärtsantriebssystem (410); ein rechtes hinteres Antriebssystem (460) und ein rechtes Vorwärtsantriebssystem (450);
wobei sich das linke hintere und das rechte Vorwärtsantriebssystem in einer Richtung drehen und sich das linke vordere und das rechte hintere Antriebssystem in entgegengesetzter Richtung drehen.

6. Das Vertikalstart- und Lande-Multirotorflugzeug nach Anspruch 1, wobei:
das primäre Flugsteuerungssystem ein System vom Antriebsschubsteuerungstyp ist, wobei der Flugzeugantriebsschub zur Flugsteuerung für Multirotor- oder Flugzeugmodi angepasst wird, wobei die primäre Flugsteuerbewegung des Flugzeugs durch Schubdifferenziale der Antriebssysteme bereitgestellt wird.

7. Das Vertikalstart- und Lande-Multirotorflugzeug nach Anspruch 1, wobei:
der Kipprumpf sowohl im Multirotor- als auch im Flugzeugmodus Besatzung und Nutzlast aufnimmt und zur Stabilität der Flugzeugnickachse beiträgt, indem er das Trägheitsmoment reduziert;
und wobei die Hecksteuerflächen unter normalen Flugbedingungen als Hilfs- oder Sicherungssystem für das primäre Flugsteuerungssystem vom Schubdifferentialtyp fungieren und unter Notfallbedingungen als primäres Steuerungssystem dienen.

8. Das in Anspruch 1 genannte Vertikalstart- und Landemultirotorflugzeug, umfassend:
ein Flugsteuerungssystem, das in einem Multirotormodus und einem Flugzeugmodus betreibbar ist; wobei in einem Multirotormodus ein Flugsteuerstab einen zyklischen Steuereingang bereitstellt und eine Drossel den kollektiven Schub und die Motorleistung steuert und Seitenruderpedale zur Giersteuerung verwendet werden;
wobei im Flugzeugmodus die Flugsteuerstange als ein Flugzeugsteuerrad oder -knüppel fungiert und die Drossel den Motorschub steuert und Seitenruderpedale zur Giersteuerung verwendet werden;
wobei das Flugsteuerungssystem zwischen Multirotor- und Flugzeugmodi unter Verwendung eines elektronischen Flug-/Motorsteuerungssystems übergeht;
wobei in beiden Multirotor- und Flugzeugmodi das Flugsteuerungssystem den Antriebsschub einstellt; und wobei das Flugsteuerungssystem V-Leitwerksflächen als eine Hilfssteuerung verwendet.

9. Das Vertikalstart- und Lande-Multirotorflugzeug nach Anspruch 1, ferner umfassend:
ein Notlandesystem mit drei kleinen Fahrwerken, wobei eines an jeder Flügelspitze und eines am Heckabschnitt installiert ist;
wobei das Notlandesystem für eine Notlandung bei anormalen Bedingungen wie Triebwerksausfall oder Ausfall des Rumpfkippmechanismus verwendet wird;
wobei im Fall anormaler Bedingungen das Flugzeug in Flugzeugkonfiguration verriegelt ist und auf einer geeigneten Landebahn landet, wobei es nach dem Verlangsamen zuerst auf den Flügelspitzenfahrwerken und dann auf dem Heckfahrwerk aufsetzt;
und wobei im Fall eines vollständigen oder umfangreichen Triebwerksausfalls die V-Leitwerksflächen als Hauptflugsteuerungssystem fungieren.

10. Das in Anspruch 1 genannte Vertikalstart- und Landemultirotorflugzeug, wobei das Flugzeug eines der folgenden Antriebssysteme umfasst:
ein klassisches Antriebswellen-System, angetrieben von einem doppelwelligen Turbinentriebwerk mit Propeller;
einen Gasturbinenmotor, der einen Generator zum Antreiben von Elektromotoren antreibt;
oder ein wasserstoffbetriebenes Brennstoffzellen-Elektromotorsystem;
wobei alle Propeller vom Verstellpropeller-Typ sind;wobei der Luftschraubenschub durch Verstellen der Propellerblattverstellung gesteuert wird.

## Revendications

1. Un aéronef multirotor à décollage et atterrissage verticaux (100) comprenant :
Un cadre de support à ailettes (110) qui comprend des bras gauche et droit en forme d'aile reliés à des cadres de support gauche et droit (510, 610), reliés entre eux par un longeron principal (900) ;
Lesdits bras en forme d'aile gauche et droit sont symétriques, comprenant des bras en forme d'aile avant et arrière ; chacun desdits bras en forme d'aile a des boîtiers de système de propulsion et des nacelles de support ;
Un fuselage basculant (100) ayant un poste de pilotage, une cabine et une section de queue (300), qui reçoit une charge utile et est configuré pour être incliné de 90° lorsque ledit cadre de support à ailettes est commuté en mode avion ou en mode multirotor, afin de maintenir la position du fuselage relativement parallèle au sol dans les deux modes de vol ;
Dans lequel lesdites nacelles de support comprennent également des trains d'atterrissage (710, 720, 750, 760) ;
Dans lequel ledit cadre de support à ailettes et ledit fuselage basculant ont une structure à plusieurs ailes semi-monocoque ;
Dans lequel ledit longeron principal passe à travers un longeron de support de fuselage au milieu de l'aéronef ;
Dans lequel le mouvement d'inclinaison dudit fuselage basculant est fourni par un mécanisme d'inclinaison.

2. L'aéronef multirotor à décollage et atterrissage verticaux selon la revendication 1, dans lequel : les bras en forme d'aile avant et arrière comprenant des bras internes (520, 540, 620, 640) et externes en forme d'aile (530, 550, 630, 650) connectés par des longerons qui sont connectés aux cadres de support.

3. L'aéronef multirotor à décollage et atterrissage verticaux selon la revendication 1, dans lequel : les bras en forme d'aile de la structure porteuse à ailettes ayant une section transversale de profil aérodynamique symétrique.

4. L'aéronef multirotor à décollage et atterrissage verticaux selon la revendication 1, ledit cadre de support à ailettes comprend des sections de vol principales de l'aéronef, dans lequel : des ailes, des systèmes de propulsion, des réservoirs de carburant, des corps de support et des composants de système de commande de vol primaires inclus dans ladite trame de support à ailettes.

5. L'aéronef multirotor à décollage et atterrissage verticaux selon la revendication 1, dans lequel : ledit châssis de support à ailettes comprenant un système de propulsion arrière gauche (420) ; un système de propulsion avant gauche (410) ; un système de propulsion arrière droit (460) et un système de propulsion avant droit (450) ;
dans lequel les systèmes de propulsion arrière gauche et avant droit tournent dans une direction et les systèmes de propulsion avant gauche et arrière droit tournent dans la direction opposée.

6. L'aéronef multirotor à décollage et atterrissage verticaux selon la revendication 1, dans lequel : ledit système de commande de vol primaire est un système de commande par poussée de propulsion ; la poussée de propulsion de l'aéronef étant ajustée pour le contrôle de vol en modes multirotor ou avion, le mouvement de commande de vol primaire de l'aéronef étant fourni par des poussées différentielles des systèmes de propulsion.

7. L'aéronef multirotor à décollage et atterrissage verticaux selon la revendication 1, dans lequel : ledit fuselage basculant reçoit l'équipage et la charge utile à la fois dans les modes multirotor et avion ; et contribue à la stabilité de l'axe de tangage de l'aéronef en réduisant le moment d'inertie ; et les surfaces de commande de queue fonctionnent comme un système auxiliaire ou de secours au système de commande de vol primaire de type différentiel de poussée dans des conditions de vol normales ; et fonctionnent comme le système de commande primaire dans des conditions d'urgence.

8. L'aéronef multirotor à décollage et atterrissage verticaux selon la revendication 1, comprenant :
Un système de commande de vol pouvant fonctionner dans un mode multirotor et un mode avion ; dans lequel, en mode multirotor, une barre de commande de vol fournit une entrée de commande cyclique et une manette des gaz commande une poussée collective et une puissance de moteur, et des pédales de gouvernail sont utilisées pour une commande de lacet ;
Dans lequel, en mode avion, la barre de commande de vol fonctionne comme une roue ou un manche de commande d'avion et le papillon des gaz commande la poussée du moteur, et des pédales de gouvernail sont utilisées pour la commande de lacet ;
Dans lequel le système de commande de vol effectue une transition entre des modes multirotor et avion en utilisant un système de commande électronique de vol/moteur ;
Dans lequel, dans les modes à la fois multirotor et avion, le système de commande de vol ajuste les poussées de propulsion ; et dans lequel, le système de commande de vol utilise des surfaces de commande de queue en V comme commande auxiliaire.

9. L'aéronef multirotor à décollage et atterrissage verticaux selon la revendication 1, comprenant en outre :
Un système d'atterrissage d'urgence comprenant trois petits trains d'atterrissage : un installé sur chaque extrémité d'aile et un installé sur la section de queue ;
Dans lequel ledit système d'atterrissage d'urgence est utilisé pour un atterrissage d'urgence pendant des conditions anormales, telles qu'une défaillance de moteur ou une défaillance de mécanisme d'inclinaison de fuselage ;
Dans lequel, en cas de conditions anormales : un aéronef est verrouillé dans une configuration d'avion ; et l'aéronef atterrit sur une piste appropriée ;
Atterrissant d'abord sur les trains d'atterrissage de bout d'aile, puis sur le train d'atterrissage de queue après avoir ralenti ; et dans lequel, dans le cas d'une panne de moteur totale ou étendue, les surfaces de commande de queue en V fonctionnent comme un système de commande de vol principal.

10. L'aéronef multirotor à décollage et atterrissage verticaux selon la revendication 1, dans lequel l'aéronef comprend l'un des systèmes de propulsion suivants :
Un système d'arbre d'entraînement d'hélice motorisé par une turbine à double flux classique ;
Un générateur d'entraînement de moteur à turbine à gaz alimentant des moteurs électriques ;
Ou un système de moteur électrique alimenté par pile à combustible à hydrogène ;
Dans lequel toutes les hélices sont du type à pas variable ;
Dans lequel les poussées d'hélice sont régulées en ajustant le pas de l'hélice.
